# EUROPEAN PATENT APPLICATION

(11) **EP 0 986 206 A1**
(43) Date of publication of application: **15.03.2000**
(21) Application number: 99440175.0
(22) Date of filing: 02.07.1999
(51) Int. Cl.: H04L 1/12

(54) **A method of changing the encoding level of digital data transmitted between a transmitter and a receiver at a constant rate**

(30) Priority: 13.08.1998 FR 9809917
(71) Applicant: ALCATEL, 75008 Paris (FR)
(72) Inventor: Charriere, Patrick, Wilts Sn154LS (GB)
(74) Representative: Scheer, Luc

(57) **Abstract**

The invention relates to a method of changing the encoding level of digital data transmitted between a transmitter and a receiver at a constant rate, said encoding level being determined as a function of the quality of the signal received by said receiver, an encoding level of rank 0 being defined as providing the highest degree of protection for said transmitted data and an encoding level of rank n-1 as providing a lowest degree of protection to said transmitted data. According to the invention, the method consists, during a fixed time of non-zero length, in preventing a changeover from an encoding level of rank m, where 0 ≤ m < n-1, to an encoding level of rank m+q, where 0 < m+q ≤ n-1, and where q is positive, after said received signal quality corresponds to encoding at the level m+q.

## Description

The field of the invention is that of transmitting digital data between a transmitter and a receiver, in particular via the air interface. More precisely, the present invention relates to a method of changing the encoding level of digital data which is transmitted between a transmitter and a receiver at a constant rate, said encoding level being determined as a function of the quality of the digital data transmission channel. For example, by definition, an encoding level of rank 0 can correspond to a maximum level of protection for the transmitted data while an encoding level of rank n-1 corresponds to a minimum level of protection for the transmitted data. By way of example, such a method is implemented in the adaptive multi-rate codec (AMR) project of the GSM system. Reference can usefully be made to French patent application No. 2 718 906 which describes, in particular, a method of adapting the air interface in a system for radio communication with mobile terminals.

The description below relates to the context of the GSM communications system in which a terminal, generally a mobile terminal, communicates with a base station (BTS) via a transmission medium constituted by the air interface. To transmit payload data (e.g. speech data) over the air interface of the GSM system, the interface at a terminal or a BTS has a set of n encoder-decoder pairs, each pair corresponding to a particular level of channel and data encoding and decoding. Whatever the rate of the speech encoder, the rate after channel encoding corresponds to the rate allocated to the call, for example to 22.8 Kbits/s in full rate mode and 11.4 Kbits/s in half-rate mode.

For any given pair i out of n encoder/decoder pairs, when the rate after speech encoding is high, then the payload data as transmitted has little protection (low redundancy). If under such circumstances the bit error rate (BER) is low, then the audio quality of the received data will be excellent. However, if the BER is high, then transmission will not be robust against transmission errors and audio quality will be poor. If the rate after speech encoding of the encoder/decoder pair used is lower than that of the pair i, then the audio quality obtained at low BER or large Eb/No will be less good, however transmission will be more robust when the quality of the transmission channel is less good.

The principle of AMR is thus to adapt the transmitter and the receiver to the quality of the air interface, which quality can vary not only with atmospheric conditions, but also with the relative positions and speeds of the terminal relative to the base station (in particular because of multiple paths) or with the presence or absence of disturbances that can be due to other calls. The greater the disturbance to the transmission channel, the more robust the encoding adopted for speech, and vice versa, so as to obtain the best compromise between the quality of the transmitted payload data and the transmission rate of said payload data.

In principle, the transmitted payload data is constituted by speech data, however it is also possible to transmit digital data other than audio data, for example images, text, etc. ... . In general, the data can be transmitted in the form of packets, where a packet is defined as being a certain quantity of speech data (in the context of an application to transmitting audio data) or of digital data in the broad meaning of the term.

When the transmitter changes its encoding level after receiving information to the effect that its current encoding level is no longer appropriate for propagation conditions, either to switch to a more robust level of encoding or else to switch to a level of encoding that is less robust, it ought in theory to inform the receiver so that the receiver changes its decoding level correspondingly. This information is transmitted by means of appropriate signaling, either in the communications band allocated to transmitting payload data (e.g. in the form of a header for a packet that also contains payload data), or else in some other band.

This achieves automatic adaptation to the propagation conditions encountered by selecting the most appropriate speech encoder plus channel encoder pair from the n available pairs. Thus, each transmission channel quality range corresponds to a specific level of encoding/decoding for payload data.

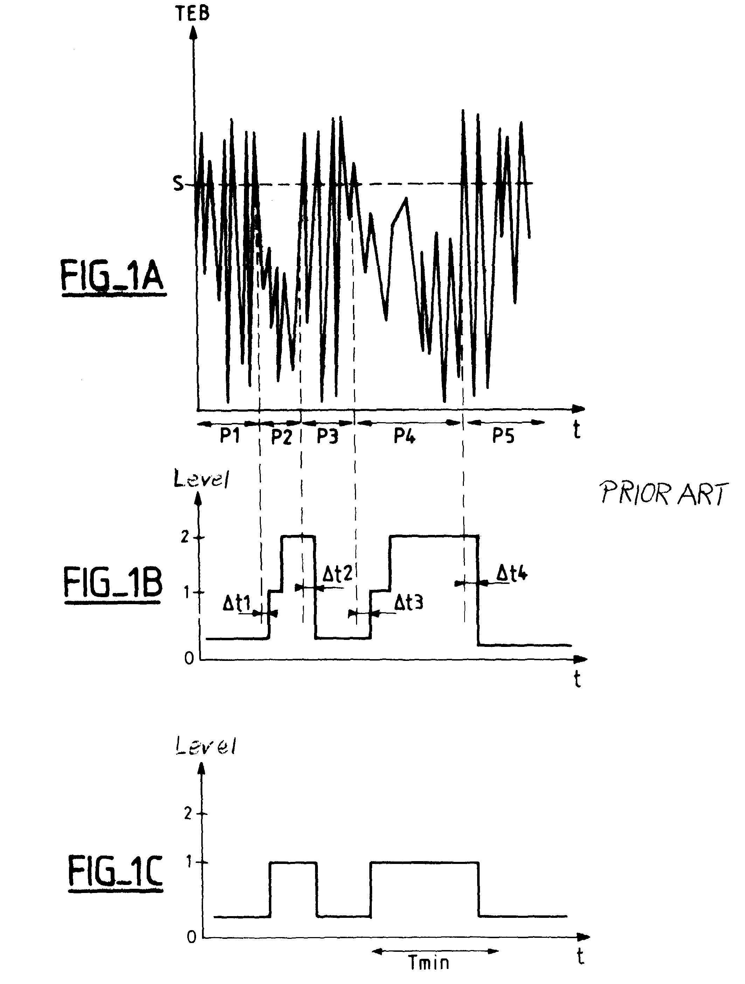

The problem encountered with existing AMR modems is described with reference to Figures 1A and 1B.

Figure 1A shows measured variation in the bit error rate (BER) as a function of time, and Figure 1B shows the encoding/decoding levels used as a function of said measured BER.

During a first stage P1, the measured BER (e.g. over a plurality of packets transmitted in time division multiple access (TDMA) mode) is greater than a threshold value S. The corresponding encoding level used for transmission is level 0 which provides maximum protection for the transmitted data. During a following stage P2, the quality of the transmission channel improves, the BER going below the threshold S so that an encoding level of higher rank, in this case encoding level 2, can be used. In this case, encoding takes place at an encoding level 1 for a short period, e.g. for the duration of one frame. Between the moment at which it is decided to change the encoding level and the moment at which the new encoding level is actually applied, there elapses a time Δti which depends on the reaction time of the system (in particular for evaluating BER, taking a decision concerning encoding level to be applied, and transmitting information about said encoding level). This time Δti is not fixed. At the end of stage P2, the BER deteriorates again and it is decided to go back to a more robust encoding level, e.g. encoding level 0. This changeover from encoding level 2 to encoding level 0 nevertheless requires a certain length of time Δt2 during which there is a risk of losing all of the frames transmitted after the quality of the channel has deteriorated and until the system returns to level 0. This problem occurs again in Figures 1A and 1B at the end of the period P4 during which encoding level 2 was in use, when a rapid deterioration in channel quality gives rise to the possibility of packets transmitted during the time Δt4 being lost, which time corresponds to the reaction time of the system in changing over from encoding level 2 to encoding level 0. In the same manner, a loss of packets can be observed if it is encoding level 1 that is the appropriate encoding level.

When transmitting speech data, this loss of packets causes the audio quality of the received signal to be degraded.

In addition, when the errors of the transmission channel are such that the signaling data is also corrupted, i.e. in particular the data specifying the encoding level that is to be used by the transmitter, the encoded detection level will be erroneous and the receiver will attempt to decode frames at a level other than the level selected for encoding. This gives rise automatically to the loss of the frames concerned by the signaling concerned. If transmission error is detected, then the receiver can adopt a different strategy in order to estimate the most probable encoding level.

The present invention seeks in particular to remedy those drawbacks.

More precisely, one of the objects of the invention is to provide a method of changing the encoding level of digital data transmitted between a transmitter and a receiver at a constant rate, said method serving to avoid or at least minimize data loss when the transmission channel suffers from sudden variations in quality.

This object and others that appear below is achieved by a method of changing the encoding level of digital data transmitted between a transmitter and a receiver at a constant rate, said encoding level being determined as a function of the quality of the signal received by said receiver, an encoding level of rank 0 being defined as providing the highest degree of protection for said transmitted data and an encoding level of rank n-1 as providing a lowest degree of protection to said transmitted data, consisting during a fixed time of non-zero length in preventing a changeover from an encoding level of rank n, where 0 ≤ m < n-1, to an encoding level of rank m+q, where 0 < m+q ≤ n-1, and where q is positive, after said received signal quality corresponds to encoding at the level m+q.

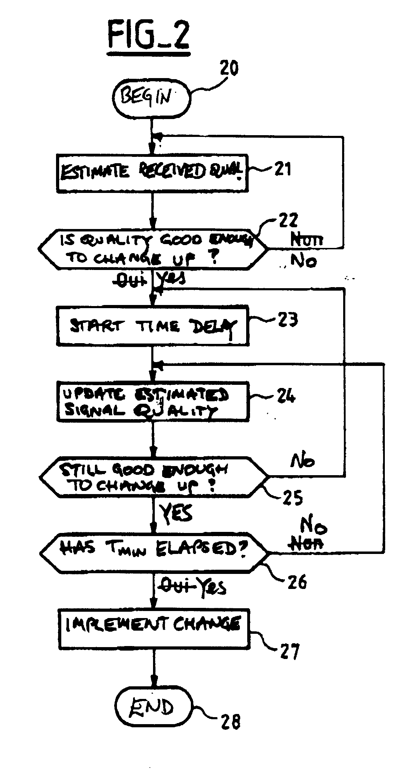

Other characteristics and advantages of the invention will appear on reading the following description of a preferred implementation, given by way of non-limiting illustration, and from the accompanying drawings, in which:
. Figures 1A and 1B show respectively measured variation in BER as a function of time, and the encoding levels used as a function of the BER;
. Figure 1C shows the encoding levels used as a function of measured BER, said encoding levels being determined by the method of the invention; and
. Figure 2 is a flow chart showing one possible implementation of the method of the invention.

Figures 1A and 1B are described above with reference to the state of the art.

In the description below, it is assumed that payload data is being encoded on one out of n possible levels, where level 0 is the most robust and level n-1 is the least robust.

The principle of the invention consists in preventing changes taking place too quickly towards levels that are less robust than the current encoding level, and in doing so regardless of the transmission conditions on the channel.

In other words, in the example of Figure 1B, if the measured BER makes it possible to use level 2, then the transmitter is prevented from using level 2 if level 0 or level 1 has been in use for less than a time Tmin.

Figure 1C shows the encoding levels used as a function of the measured BER, said encoding levels being determined by the method of the invention.

During period P1, and as in Figure 1B, the encoding level used is level 0. When the receiver of the transmitted data observes that the measured BER makes it possible to change over to encoding level 2, a time delay of duration Tmin is started. If during the time Tmin it is confirmed that encoding level 2 can still be used, i.e. if the measured BER during Tmin does not at any time correspond to encoding level 0 or encoding level 1, then the system changes over to encoding level 2 at the end of the time delay Tmin.

However, if at any time during the time delay Tmin it is observed that the encoding level to be applied is level 0 or level 1, then the changeover to encoding level 2 will not take place as originally expected. The result of this approach can be seen in Figure 1C: the time in period P2 during which the measured BER corresponds to an encoding level 2 is shorter than Tmin, so encoding level 2 is not applied. As a result, the data which would otherwise have been transmitted with level 2 encoding during time Δt2, and thus encoded at a level that is insufficient and that can consequently cause the data to be degraded, is in fact transmitted with encoding at level 1, or better with encoding at level 0.

On this topic, it will be observed in Figure 1C that an encoding level 1 is used even though the measured BER should lead to a changeover to encoding level 2. It has been shown that it is advantageous to increase encoding level progressively when transmission conditions improve. For example, if the current encoding level is level 0, and if the estimated BER corresponds to encoding at level 3, it is preferable to use level 1 during a first time Tmin, and encoding level 2 during a second time Tmin, prior to moving on to encoding level 3, providing said encoding level 3 corresponds to the encoding level that is to be reached when implementing the method of the invention. Naturally, it is also possible to retain encoding level 0 for the time Tmin, the essential point being to avoid making immediate use of the encoding level corresponding to the current BER as measured while propagation conditions are improving. The length of the time Tmin thus constitutes a period for observing or confirming that a less powerful encoding level can be used.

More generally, the invention consists in preventing, for a non-zero length of time Tmin, any changeover from an encoding level of rank n where 0 ≤ m < n-1, to an encoding level of m+q, where 0 < m+q ≤ n-1, and where q is positive, when the quality of said transmission channel corresponds to encoding at the level m+q.

It has been shown that the loss of quality due to sub-optimal selection of encoding level is largely compensated by avoiding frame loss.

In the state of the art, and assuming that there are n available levels (speech encoder + channel encoder), when the BER of the radio channel improves significantly during a certain length of time and then suddenly becomes very bad again, if the adaptation mechanism has decided to change to a transmission level that is much less robust (level 2 or 3), then all of the frames that are transmitted after channel quality has dropped off and until the system has returned to level 0 run the risk of being lost. In contrast, if the current level (level 0 in this example) or a slightly more robust level (level 1) is adopted in accordance with the present invention, then these frames still have a chance of being saved because of the more robust level of encoding (level 0 or level 1).

At the receiver, if information is received to the effect that the next X frames are going to be encoded on level 2 or 3 even though the system was at level 0 less than Tmin ago, it is deduced that the information as received is impossible, and therefore false. Under such circumstances, one possible strategy is not to change detection level compared with the X preceding frames. The invention thus makes it possible to save frames when radio conditions are very bad or when they present sudden changes in quality.

The invention is particularly applicable to transmission over an air interface, but it is also applicable to any other interface that suffers from variations in quality that can be measured at the receiver, e.g. in terms of BER or of Eb/No.

Figure 2 is a flow chart showing one possible implementation of the method of the invention.

Step 20 is a begin step preceding a step 21 of estimating the quality of the received signal. Step 21 can equally well consist in estimating the binary error rate BER of the received signal, the signal-to-noise ratio, the C/I ratio, the distance between the transmitter and the receiver, time alignment, the impulse response of the transmission channel, or measuring the power of the received signal, for example.

Step 22 is a test step in which it is verified whether the quality of the received signal has improved sufficiently to warrant changing over to a level of encoding that its less robust (changing over from a current encoding level of rank m to an encoding level of rank m+q). If the response is "no", then the rank m encoding level is conserved (or an encoding level of lower rank is adopted, e.g. level 1 for an estimated BER corresponding to level 2). If the response is "yes", a time delay of duration Tmin is started in step 23. During the time Tmin, the quality of the received signal is updated on each newly received packet (step 24) and it is verified (step 25) whether the encoding level m+q selected in step 21 corresponds at least to the signal quality as estimated in step 24. If the answer is "yes", that means that signal quality has not degraded sufficiently to make the change in level decided on in step 22 unsuitable, and in step 26 it is verified whether the time delay Tmin has elapsed. If Tmin has elapsed, then the change in encoding level decided on in step 22 is implemented (step 27) and the method ends (step 28). If in step 26 the time Tmin has not yet elapsed, then a new estimate is made of the quality of the received signal (step 24).

If in step 25 it is observed that the quality of the signal has deteriorated sufficiently for the change in level decided on in step 22 to be inappropriate, then the time delay Tmin is restarted in step 23. The time delay Tmin is thus restarted for each decision to change the encoding level.

Alternatively, step 27 consists in incrementing the current encoding level by 1 every Tmin, so as to reach the encoding level corresponding to the BER estimated in step 21 in stages, as explained above.

A particular application of the invention lies in adapting the encoding level to the transmission conditions that are encountered in a cellular communications network, e.g. in the GSM network.

In a preferred implementation, for any given call, changes in the encoding levels applied to data transmitted over the up and down paths are always decided on in the base station. For data transmitted over the down path (base station to terminal) the terminal demodulates the received signal, and then sends a measurement report concerning the quality of the received data to the base station over a signaling channel. The base station then decides, on the basis of the measurement report, on the encoding level that needs to be applied, and it sends this information to the terminal. The length of time Tmin can also be sent to the terminal, unless said length of time is predetermined. An alternative consists in the terminal making use of a modem which automatically recognizes the encoding level that is in use. Under such circumstances, there is no need to transmit or to know the length of the time Tmin.

For data transmitted on the up path (from the terminal to the base station), the base station demodulates the data as transmitted by the terminal and decides whether encoding level needs to be changed. If it does decide to change level, it informs the terminal over the signaling channel.

For any given call, the encoding levels used in the up and the down directions can thus be different.

## Claims

1. A method of changing the encoding level of digital data transmitted between a transmitter and a receiver at a constant rate, said encoding level being determined as a function of the quality of the signal received by said receiver, an encoding level of rank 0 being defined as providing the highest degree of protection for said transmitted data and an encoding level of rank n-1 as providing a lowest degree of protection to said transmitted data, the method being characterized in that it consists during a fixed time (Tmin) of non-zero length in preventing a changeover from an encoding level of rank n, where 0 ≤ m < n-1, to an encoding level of rank m+q, where 0 < m+q ≤ n-1, and where q is positive, after said received signal quality corresponds to encoding at the level m+q.

2. A method according to claim 1, characterized in that said receiver is constituted by a base station in a cellular network.

3. A method according to claim 1 or 2, characterized in that it is implemented in a GSM type network.
